(19) Europäisches Patentamt
European Patent Office
Office européen des brevets

(11) EP 2 767 331 A1

(12) EUROPEAN PATENT APPLICATION

(43) Date of publication:
20.08.2014 Bulletin 2014/34

(51) Int Cl.:
B01D 67/00 (2006.01)  B01D 71/36 (2006.01)

(21) Application number: 14154612.7

(22) Date of filing: 11.02.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 15.02.2013 US 201313768154

(71) Applicant: Pall Corporation
Port Washington, NY 11050 (US)

(72) Inventors:
• SITTERER, Andrew T.
Massapequa, NY New York 11758 (US)

• SINGH, Amarnauth
Selden, NY New York 11784 (US)
• FIELDING, Joanna
Pensacola, FL Florida 32514 (US)
• GSELL, Thomas C.
Glen Head, NY New York 11545 (US)
• ISHEE, Michael G.
Pace, FL Florida 32571 (US)

(74) Representative: Hoeger, Stellrecht & Partner
Patentanwälte
Uhlandstrasse 14c
70182 Stuttgart (DE)

(54) PTFE membrane

(57) Porous PTFE membranes comprising a first porous surface and a second porous surface, and a bulk between the first porous surface and the second porous surface, wherein the membrane has a pore rating of from about 2 nanometers to about 50 nanometers, and the first and second porous surfaces each comprise a ratio of non-fused nodule area to fused nodule area of about 1 or greater, and methods of making and using the membranes, are disclosed.

Figure 1

Printed by Jouve, 75001 PARIS (FR)

**Description**

BACKGROUND OF THE INVENTION

Expanded PTFE (ePTFE) membranes are used in a variety of liquid and gas filtration applications. However, there is a need for porous PTFE membranes having pore ratings in the nanometer range, that exhibit high filtration efficiency while providing low flow resistance.

These and other advantages of the present invention will be apparent from the description as set forth below.

BRIEF SUMMARY OF THE INVENTION

An embodiment of the invention provides a porous PTFE membrane comprising a first porous surface and a second porous surface, and a bulk between the first porous surface and the second porous surface, wherein the membrane has a pore rating in the range of from about 2 nanometers to about 50 nanometers, and the first and second porous surfaces each comprise a ratio of non-fused nodule area to fused nodule area of about 1 or greater, preferably, about 2 or greater.

In another embodiment, a method for making a porous PTFE membrane is provided, the method comprising (a) subjecting a porous PTFE membrane to elevated pressure for a given exposure time; and (b) subsequently subjecting the porous PTFE membrane to elevated temperature for an exposure time of at least about 10 seconds, wherein the elevated temperature is at least about 200° C and less than 325° C, and wherein the porous membrane is not contacted by a heating element while being subjected to the elevated temperature. Preferably, (b) comprises subjecting the porous PTFE membrane to elevated temperature in the range of from about 200° C to about 320° C for an exposure time of at least about 20 seconds, and wherein the membrane is not contacted by a heating element while being subjected to the elevated temperature.

Devices and articles including the membranes, and methods of using the membranes, are also provided in accordance with embodiments of the invention.

BRIEF DESCRIPTION OF THE SEVERAL VIEWS OF THE DRAWING(S)

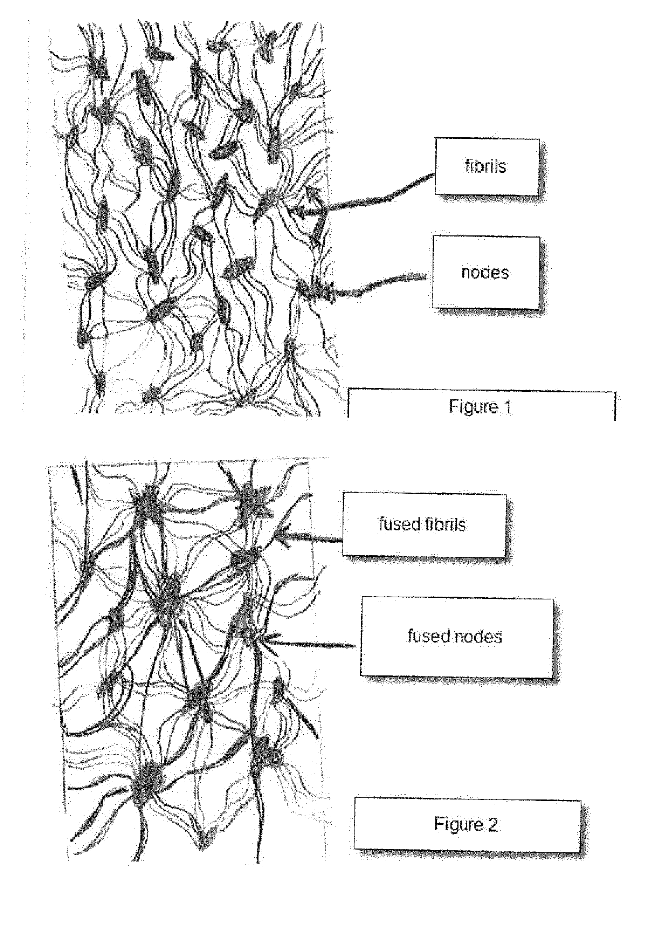

Figure 1 is a diagrammatic representation of a portion of a porous surface of a PTFE membrane according to the present invention, showing non-fused fibrils and nodes, the membrane having been prepared by a method including subjecting the porous surface of the membrane to heat, at a temperature in the range of from about 200° C to below the melting point of PTFE, without contacting the surface of the membrane with a heated element.

Figure 2 is a diagrammatic representation of a portion of a porous surface of a comparative PTFE membrane, showing fused fibrils and nodes, the membrane having been prepared by a method including subjecting the surface of the membrane to heat, at a temperature close to the melting point of PTFE, wherein the surface of the membrane was contacted with a heated element while subjecting the surface of the membrane to heat.

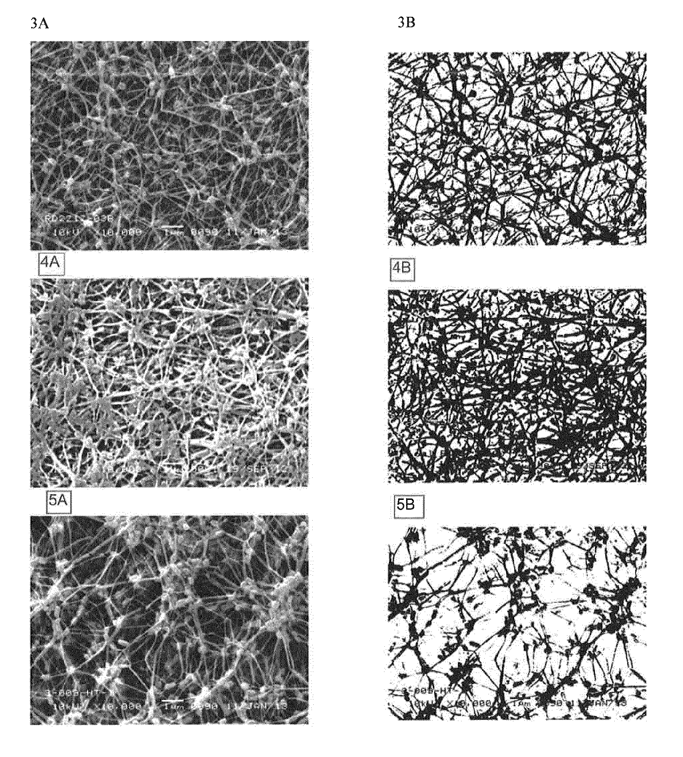

Figure 3 shows a surface of native PTFE. Figure 3A shows a scanning electron micrograph (SEM) of a top surface (also showing some depth), and Figure 3B shows a modified view (created using MATLAB software, MathWorks, Natic, MA), showing only the top surface.

Figure 4 shows a surface of a PTFE membrane that has been calendared and directly contacted by a metal element heated to at least 315° C for 20 minutes. Figure 4A shows an SEM of a top surface (also showing some depth), Figure 4B shows a modified view, showing only the top surface.

Figure 5 shows a surface of a PTFE membrane according to an embodiment of the present invention, the membrane having been prepared by a method including calendaring and subjecting the membrane to heat of at least about 200° C but below the melting point of PTFE, for two minutes, without contacting a surface of the membrane with a heated element. Figure 5A shows an SEM of a top surface (also showing some depth), Figure 5B shows a modified view, showing only the top surface.

DETAILED DESCRIPTION OF THE INVENTION

In accordance with an embodiment of the present invention, a porous PTFE membrane is provided comprising a first porous surface and a second porous surface, and a bulk between the first porous surface and the second porous surface, wherein the membrane has a pore rating in the range of from about 2 nanometers to about 50 nanometers, and the first and second porous surfaces each comprise a ratio of non-fused nodule area to fused nodule area of about 1 or greater, preferably, about 2 or greater. In one embodiment, the membrane has a pore rating in the range of from about 5 nanometers to about 20 nanometers.

A method for making a porous PTFE membrane according to an embodiment of the invention comprises (a) subj ecting a porous PTFE membrane to elevated pressure for a given exposure time; and (b) subsequently subjecting the porous PTFE membrane to elevated temperature for an exposure time of at least about 10 seconds, wherein the elevated temperature is at least about 200° C and less than 325° C, and wherein the porous membrane is not contacted by a heating element while being subjected to the elevated temperature. Preferably, (b) comprises subjecting the porous PTFE membrane to elevated temperature in the range of from about 200° C to about 320° C for an exposure time of at least about 20 seconds, and wherein the membrane is not contacted by a heating element while being subjected to the elevated temperature.

In another embodiment, a method for making a porous PTFE membrane according to an embodiment of the invention comprises (a) subjecting a sheet comprising PTFE to elevated pressure for a given exposure time; optionally removing lubricant from the sheet; (b) creating an initial porosity in the sheet to provide a porous PTFE membrane; (c) subjecting the porous PTFE membrane to elevated pressure for a given exposure time; and (d) subsequently subjecting the porous PTFE membrane to elevated temperature for an exposure time of at least about 10 seconds, wherein the elevated temperature is at least about 200° C and less than 325° C, and wherein the porous membrane is not contacted by a heating element while being subjected to the elevated temperature.

Yet another embodiment of a method of making a porous PTFE membrane comprises (a) subjecting a sheet comprising PTFE to elevated pressure for a given exposure time; optionally removing lubricant from the sheet; (b) creating an initial porosity in the sheet to provide a porous PTFE membrane; (c) subj ecting the porous PTFE membrane to an elevated temperature for a given exposure time wherein the combination of temperature and exposure time does not stabilize the PTFE membrane structure; (d) subjecting the non-stabilized PTFE membrane to elevated pressure for a given exposure time; and (e) subsequently subjecting the porous PTFE membrane to elevated temperature for an exposure time of at least about 10 seconds, wherein the elevated temperature is at least about 200° C and less than 325° C, and wherein the porous membrane is not contacted by a heating element while being subjected to the elevated temperature.

In other embodiments, membranes are provided, wherein the membranes are prepared by methods according to the invention.

The porous PTFE membranes according the invention advantageously provide a combination of high filtration efficiency and low flow resistance in the nanometer pore rating range, and are useful in a wide range of liquid, and gas (including air) filtration applications, including sterile filtration. Exemplary applications include filtration of various fluids used in the semiconductor industry such as etchant baths, e.g., including acids, ozone, and/or peroxide additives, fluids used in cleaning silicon wafers, e.g., as part of SC-1 and/or SC-2 cleaning; and venting, e.g., while preventing bacteria passage. The inventive membranes are dimensionally stable. In some embodiments, the porous PTFE membranes can be utilized individually, e.g., as unsupported membranes, and in other embodiments, the porous PTFE membranes can be combined with other porous elements and/or another component, to provide, for example, an article such as a composite, a filter element, and/or a filter.

In accordance with an embodiment of a method for making porous PTFE membranes according to the invention, a porous PTFE membrane is subj ected to an elevated pressure for a given exposure time, and subsequently subjected to an elevated temperature, in the range of from about 200° C to below the melting temperature or melting point of PTFE, for a given exposure time, wherein subj ecting the porous PTFE membrane to an elevated temperature (to stabilize the membrane) does not include contacting the membrane with a heating element such as a heated roller or heated plate or heated metal element, to produce the inventive porous PTFE membranes. In accordance with the preferred embodiment of the method according to the invention, subjecting a porous PTFE membrane to an elevated temperature without contacting the membrane with a heating element comprises exposing at least one surface of the membrane to, for example, convective or radiative heat, including infrared, microwave, or heated air, e.g., exposing the membrane to heated air in a heated air chamber such as a conveyor oven or the like while the membrane is restrained on at least opposing edges to prevent shrinking while passing through the oven, at a temperature of at least about 200° C and below 325 ° C. The given exposure time at the elevated temperature is typically at least about 10 seconds, preferably, at least about 60 seconds, or more.

Advantageously, methods according to embodiments of the invention are suitable for both continuous membrane production and batch production. Additionally, methods according to embodiments of the invention can be "tunable," efficiently producing membranes of various pore ratings, pore grades and/or efficiencies.

Porous PTFE membranes, preferably, biaxially expanded porous PTFE membranes, are compressed under elevated pressure (e.g., calendared, or compressed by other processes known in the art), before exposure to elevated temperature. The initial porosity of the membranes can be created by, for example, stretching, expansion, perforation, and/or other processes as is known in the art. Typically, the membrane is compressed under a pressure of at least about 30 pounds per square inch (psi) (about 207 kPa), for example, in the range from about 50 psi (about 345 kPa) to about 600 psi (about 4140 kPa), or more, preferably, the membranes are compressed under a pressure in the range of from about 225 psi (1552 kPa) to about 350 psi (2415 kPa), or more.

Typically, the membranes pass through the calendar rolls at a rate in the range of from about 5 feet per minute (fpm) (about 0.03 meters per second (mps)) to about 30 fpm (about 0.15 mps). However, the rate can be faster or slower. Preferably, the rate is at least about 10 fpm (about 0.05 mps).

After the porous membrane has been compressed, it is subjected to elevated temperature for a given exposure time to stabilize the membrane, wherein the elevated temperature is about 200° C to less than 325° C, which is less than the melting point of PTFE (the melting point of pure unmodified PTFE is about 345° C), and the exposure time is typically at least 10 seconds, e.g., in the range of from about 20 seconds to about 35 minutes, preferably, the exposure time is at least about 45 seconds, for example, in the range of about 60 seconds to about 20 minutes. Typically, the elevated temperature is at least about 200° C (though less than 325° C), for example, in the range of from about 220° C to about 320° C, but temperatures can be higher (though less than 325° C), or lower. If desired, the membrane can be unilaterally expanded (e.g., stretched in the transverse direction from about 5% to about 50%) and/or biaxially expanded while subjecting the membrane to elevated temperature.

Typically, the membranes pass through the heated air chamber at a rate in the range of from about 5 fpm (about 0.03 mps) to about 30 fpm (about 0.15 mps). However, the rate can be faster or slower. Preferably, the rate is at least about 10 fpm (about 0.05 mps).

The exposure time at elevated temperature can differ from the exposure time at elevated pressure. The membrane is subjected to elevated temperature (to stabilize the membrane) without major surfaces of the membrane (the upper and lower surfaces) being directly contacted by a heating element such as a heated roller; rather, at least one major surface of the membrane is exposed to, for example, convective or radiative heat as described above, e.g., in a conveyor oven while the membrane is restrained on at least opposing edges to prevent shrinking while passing through the oven. Without being bound to any particular mechanism, it is believed that subjecting the porous membrane to an elevated temperature below the melting point of PTFE without the major surfaces of the membrane being directly contacted by a heating element is similar to an annealing process, resulting is less fusing and/or closing of pores while stabilizing the crystalline structure (see Figures 1, and 5A-5B). In contrast, and without being bound to any particular mechanism, it is believed that subjecting the porous membrane to elevated temperature at or above the melting point of PTFE while directly contacting either or both major surfaces of the membrane with a heating element is similar to a sintering process, resulting is more fusing and/or closing of pores (see Figures 2, and 4A-4B).

Membranes according to the invention have good mechanical stability, for example, illustratively, in contrast with an untreated membrane that is heated to 150° C for 30 minutes and allowed to cool, exhibiting a change in dimension of about 40% to about 50%, membranes according to an embodiment of the invention exhibit a change in dimension in the range of from about 1% to about 30%. The stability of the membranes can also be demonstrated according to, for example, ASTM D2838-09 "Standard Test Method for Shrink Tension and Orientation Release Stress of Plastic Film and Thin Sheeting."

Typically, after subjecting the major surfaces of the membrane (i.e., the upper and lower surfaces of the membrane) to elevated temperature and elevated pressure in according with embodiments of the invention, the ratio of the non-fused nodule area to fused nodule area is about 1 or greater (e.g., in the range of from about 1 to about 5), more typically, about 1.5 or greater, preferably, about 2 or greater, for example, in the range of about 2 to about 5.

There are a variety of methods for determining the ratio of non-fused nodule area to fused nodule area. In example 2 in this application, SEM images of membrane surfaces are obtained, and copied using AUTOCAD software (AutoDesk, Inc., San Rafael, CA). Lines are drawn around the perimeters of the nodes that are flattened and melted together (fused), and the software calculates the total area for all of the fused nodes. Similarly, lines (using a different line type) are drawn around the perimeters of the nodes that are non-fused, and the software calculates the total area for all of the flattened fused nodes. The software calculates the ratio of non-fused nodule area to fused nodule area.

The pore structure used for the porous PTFE membrane depends on the size of the particles to be removed from the fluid, the composition of the fluid to be treated, and the desired effluent level of the treated fluid. The porous PTFE membranes can have any suitable pore structure in the nanometer range, e.g., a pore rating, a pore size (for example, as evidenced by bubble point, or by $K_L$ as described in, for example, U.S. Patent 4,340,479 (e.g., in the range of about 65 to about 100 psi), or evidenced by capillary condensation flow porometry), a mean flow pore (MFP) size (e.g., when characterized using a porometer, for example, a Porvair Porometer (Porvair plc, Norfolk, UK), or a porometer available under the trademark POROLUX (Porometer.com; Belgium)), a pore diameter (e.g., when characterized using the modified OSU F2 test as described in, for example, U.S. Patent 4,925,572), removal rating, or gold particle filtration efficiency or gold particle challenge testing rating (e.g., as generally described in Mizuno, T., et al., "A Novel Filter Rating Method Using Less Than 30-nm Gold Nanoparticle and Protective Ligand," IEEE Transactions of Semiconductor Manufacturing, 22(4), 452, (2009)).

A typical method for determining gold particle filtration efficiency based on Mizuno, T., et al. in IEEE Transactions of Semiconductor Manufacturing, 22(4), 452, (2009) can be summarized as follows. Materials: ultrapure water (UPW) source; gold colloid nanoparticles, monodisperse, NIST traceable source; preferably, a surface treatment agent such as mercaptosuccininc acid or 2-amino-2-hydroxymethyl-1,3-propanediol; filter housing for cartridge or flat sheet disk; flow control and measurement, pressure control and measurement; injection or syringe pump; pH, resistivity, TOC, temperature measurement of UPW; and an inductively Coupled Plasma Mass Spectrometer (ICP-MS) instrument to measure Au concentration. Test Protocol: install filter cartridge or flat sheet sample while minimizing contamination; prewet the filter with alcohol followed by flushing in UPW; pretreat the filter in the surface treatment agent for 30 minutes to allow all surfaces to be coated; initiate UPW flow to wet the filter; vent the housing to eliminate trapped air; monitor TOC, resistivity, pH, and temperature of the UPW; collect sample downstream of the filter as the UPW control (while minimizing contamination) and collect a representative sample; inject Au colloid suspension (at the appropriate concentration, diluted in UPW containing the appropriate surface treatment agent); use the lowest concentration to yield 3 Log Reduction Value (LRV) resolution on ICP-MS (for flat sheet sample can make up entire volume to Au NP challenge concentration and use pump or $N_2$ pressure to flow challenge suspension through the flat sheet sample); collect upstream and downstream sample aliquots, e.g., at 10, 30, and 60 minutes; measure Au concentration via ICP-MS using UPW control sample as blank, traceable commercially available Au standards for calibration, and checking for linearity of Au colloid concentration range (dilution may be required for upstream samples); calculate Au colloid NP concentration from ICP-MS Au measurement (for example, Au colloid may be AuCl3); and calculate LRV from 60 minute samples:

$$LRV = \log(\text{upstream}/\text{downstream}).$$

Preferably, the porous PTFE membranes according to the invention have a pore rating in the range of from about 1 nanometers to about 50 nanometers, typically, in the range of from about 2 nanometers to about 35 nanometers, preferably in the range of from about 5 nanometers to about 20 nanometers.

Typically, the membrane has a thickness in the range of from about 0.2 to about 3.0 mils (about 5 to about 76 microns), preferably, in the range of from about 0.5 to about 0.8 mils (about 13 to about 20 microns), though membranes can be thicker or thinner than those values.

The porous PTFE membrane can have any desired critical wetting surface tension (CWST, as defined in, for example, U.S. Patent 4,925,572). The CWST can be selected as is known in the art, e.g., as additionally disclosed in, for example, U.S. Patents 5,152,905, 5,443,743, 5,472,621, and 6,074,869. Typically, the membrane has a CWST of in the range of from about 19 dynes/cm (about $19 \times 10^{-5}$ N/cm) to about 25 dynes/cm (about $25 \times 10^{-5}$ N/cm).

The surface characteristics of the membrane can be modified (e.g., to affect the CWST, to include a surface charge, e.g., a positive or negative charge, and/or to alter the polarity or hydrophilicity of the surface) by wet or dry oxidation, by coating or depositing a polymer on the surface, or by a grafting reaction. Modifications include, e.g., irradiation, a polar or charged monomer, coating and/or curing the surface with a charged polymer, and carrying out chemical modification to attach functional groups on the surface. Grafting reactions may be activated by exposure to an energy source such as gas plasma, vapor plasma, corona discharge, heat, a Van der Graff generator, ultraviolet light, electron beam, or to various other forms of radiation, or by deposition using a plasma treatment.

An article such as a filter, filter element and/or composite including the porous PTFE membrane can include additional elements, layers, or components, that can have different structures and/or functions, e.g., at least one of any one or more of the following: prefiltration, support, drainage, spacing and cushioning. Illustratively, the filter can also include at least one additional element such as a mesh and/or a screen.

In accordance with embodiments of the invention, the membrane, filter element, composite and/or filter can have a variety of configurations, including planar, pleated, spiral, and/or hollow cylindrical.

The membrane, filter element, composite and/or filter is typically disposed in a housing comprising at least one inlet and at least one outlet and defining at least one fluid flow path between the inlet and the outlet, wherein the membrane is across the fluid flow path, to provide a filter device. Preferably, for crossflow applications, the membrane , composite and/or filter is disposed in a housing comprising at least one inlet and at least two outlets and defining at least a first fluid flow path between the inlet and the first outlet, and a second fluid flow path between the inlet and the second outlet, wherein the membrane is across the first fluid flow path, to provide a filter device. The filter device may be sterilizable. Any housing of suitable shape and providing at least one inlet and at least one outlet may be employed.

The housing can be fabricated from any suitable rigid impervious material, including any impervious thermoplastic material, which is compatible with the fluid being processed. For example, the housing can be fabricated from a metal, such as stainless steel, or from a polymer. In an embodiment, the housing is a polymer, such as an acrylic, polypropylene, polystyrene, or a polycarbonated resin.

Suitable sheets comprising PTFE (that can be subsequently processed as described above) can be prepared as is known in the art. Typically, fine powder PTFE resin is blended with a fluid lubricant, formed into a billet, and pressed to form a preform, which is extruded through a fan-shaped die having a reduction ratio in the range of 25:1 to 100:1 to form a flattened sheet. The flattened sheet is calendered to a targeted thickness, and the lubricant is preferably removed from the flattened sheet, e.g., using a high pressure steam contact surface to evaporate off the lubricant. The calendared sheet, depleted of lubricant, is preferably expanded in the machine direction by passing over a set of heated (100° C to 175° C) variable speed controlled rollers, wherein the stretching ratio is typically about 1.1 to about 20 times the original length. Preferably, the machine-directed oriented sheet (or tape) is then stretched in the transverse direction to achieve the desired stretch ratio, typically a stretch ratio of about 12 to about 30 times the width. Preferably, the tape is passed through a heated zone (typical temperatures are in the range of about 550° F to about 875° F (about 288° C to 468° C)) during or directly after stretching in the transverse direction (however, in contrast with methods known in the art, wherein the heating stabilizes the membrane structure, in accordance with embodiments of the present invention, the heating is carried out for a short period of time, e.g., less than about 60 seconds, preferably, in the range of about 10 seconds to about 40 seconds, so that the structure is not stabilized). The resultant porous PTFE membrane can subsequently be subjected to elevated pressure for a given exposure time, and subsequently subjected to elevated temperature for an exposure time of at least about 10 seconds (to stabilize the membrane), wherein the elevated temperature is at least about 200° C and less than 325° C, and wherein the membrane is not contacted by a heating element while being subjected to the elevated temperature, in accordance with embodiments of the invention.

With respect to passing the tape through a heated zone (typical temperatures are in the range of about 550° F to about 875° F (about 288° C to 468° C)) during or directly after stretching in the transverse direction as summarized above, in contrast with the preparation as is known in the art, in a preferred embodiment according to the invention, this is carried out without contacting a heated element.

The following examples further illustrate the invention but, of course, should not be construed as in any way limiting its scope.

EXAMPLE 1

This example demonstrates the preparation of single layer membranes according to an embodiment of the invention.

Fine powder PTFE resin is mixed with a hydrocarbon based fluid lubricant and subsequently formed into billets. Approximately 70-90 psi (about 483 to about 621 kPa) is applied to the billet via a pneumatic press and held for one minute to form preforms. Preforms are extruded to a reduction ratio of 50:1 via a hydraulic ram extruder at 650 psi pressure through a fan shaped die assembly into flattened sheets approximately 54 mils (about 1372 microns) thick.

The flattened sheet is calendered to a targeted final thickness of 8 mils (about 203 microns). The lubricant is then removed from the flattened sheet using a high pressure steam contact surface to evaporate off the lubricant.

The calendered sheet, depleted of lubricant, is expanded in the machine direction by passing over a set of variable speed (fast and slow) controlled rollers heated at 150° C. Media is stretched to 3.0 times the original length. The machine-directed oriented media is subsequently stretched in the transverse direction by clipping the edges of the machine-directed oriented media in the transverse direction and increasing distance between the clips to achieve a stretch ratio of 21:1. The tape is passed through a heated oven (radiant heat non-contact with a heated element) at 343° C for 20 seconds directly after stretching in the transverse direction.

Subsequently, the porous PTFE membrane is calendered at room temperature under elevated pressure of 300 psi (about 2068 kPa) to a final target thickness of 0.5 mils (about 13 microns). The medium is passed through the calendar rolls at a rate of 10 fpm (0.05 mps).

After the porous membrane has been compressed, it is passed through a heated air chamber (oven), without stretching, and exposed to a temperature of 300° C for 60 seconds. The membrane is passed through the heated air chamber at a rate of 10 fpm (.05 mps).

Properties for the membranes are as follows:

The isopropyl alcohol (IPA) $K_L$ as described in U.S. Patent 4,340,479 in the range of 65 to 100 psi is 42.6-62.6, and the gold particle efficiency value (as described in Mizuno, T., et al., "A Novel Filter Rating Method Using Less Than 30-nm Gold Nanoparticle and Protective Ligand," IEEE Transactions of Semiconductor Manufacturing, 22(4), 452, (2009) and as summarized earlier) is 1.5-2.4 log removal, corresponding to a 10 nm pore rating. The deltaP is 6.8 to 12.4 inches Hg, the thickness is in the range of from 0.4 to 1.6 mils (about 10.2 to about 40.6 microns).

After being heated to 150° C for 30 minutes and allowed to cool, the membranes shrink 3.2% to 24.2%.

EXAMPLE 2

This example demonstrates the percent fusion of the nodules on a surface of a membrane according to an embodiment of the invention (prepared as generally described in Example 1), wherein the major surfaces of the membrane are subjected to increased temperature (heated air at a temperature of 300° C for two minutes) in a conveyor oven without contacting the surfaces with a heated element, compared to native membranes, and membranes subjected to increased temperature including contacting the surfaces of the membrane with a heated element at a temperature of 315° C.

Surfaces of membranes before treatment (native; see Figures 3A and 3B), after calendaring and heating without contact (see Figures 5A and 5B), and after calendaring and heating with contact (see Figures 4A and 4B) are analyzed by outlining the nodules using AUTOCAD software (AutoDesk, Inc., San Rafael, CA) and having the software program calculate the total area for fused and non-fused nodes.

The results are provided in the following table:

| | Native | Calendared and Heated (without contact) | Calendared and Heated (with contact) |
|---|---|---|---|
| Area fused/Total area | 1.27% | 3.56% | 25.42% |
| Area non-fused/Total area | 5.66% | 7.98% | 3.39% |
| Area fused/Area non-fused | 0.2245 | 0.445 | 7.494 |
| Area non-fused/Area fused | 4.4 | 2.2 | 0.13 |

The example shows that compression and heating without contacting the major surfaces of the membrane with a heated element provides a membrane with a porous surface having a ratio of non-fused nodule area to fused nodule area of about 2.2.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and "at least one" and similar referents in the context of describing the invention (especially in the context of the following claims) are to be construed to cover both the singular and the plural, unless otherwise indicated herein or clearly contradicted by context. The use of the term "at least one" followed by a list of one or more items (for example, "at least one of A and B") is to be construed to mean one item selected from the listed items (A or B) or any combination of two or more of the listed items (A and B), unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

**Claims**

1. A porous PTFE membrane comprising a first porous surface and a second porous surface, and a bulk between the first porous surface and the second porous surface, wherein the membrane has a pore rating in the range of from about 2 nanometers to about 50 nanometers, and the first and second porous surfaces each comprise a ratio of non-fused nodule area to fused nodule area of about 1 or greater.

2. The PTFE membrane of claim 1, wherein the first and second porous surfaces each comprise a ratio of non-fused nodule area to fused nodule area of about 1.5 or greater.

3.  The PTFE membrane of claim 1, wherein the first and second porous surfaces each comprise a ratio of non-fused nodule area to fused nodule area of in the range of from about 1 to about 5.

4.  The PTFE membrane of any one of claims 1-3, having a pore rating in the range of from about 5 nanometers to about 20 nanometers.

5.  A method of making a porous PTFE membrane, the method comprising:

    (a) subjecting a porous PTFE membrane to elevated pressure for a given exposure time; and;
    (b) subsequently subjecting the porous PTFE membrane to elevated temperature for an exposure time of at least about 10 seconds, wherein the elevated temperature is at least about 200° C and less than 325° C, and wherein the membrane is not contacted by a heating element while being subjected to the elevated temperature.

6.  The method of claim 5, wherein (b) comprises subjecting the porous PTFE membrane to elevated temperature in the range of from about 200° C to about 320° C for an exposure time of at least about 20 seconds, and wherein the membrane is not contacted by a heating element while being subjected to the elevated temperature.

7.  The method of claim 5 or 6, wherein the exposure time in (b) is at least about 45 seconds.

8.  A membrane produced by the method of any one of claims 5-7.

fibrils

nodes

Figure 1

fused fibrils

fused nodes

Figure 2

3A

3B

4A

4B

5A

5B

Europäisches
Patentamt

European
Patent Office

Office européen
des brevets

**EUROPEAN SEARCH REPORT**

Application Number

EP 14 15 4612

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 313 263 A2 (GORE & ASS [US]) 26 April 1989 (1989-04-26) * paragraphs [0017], [0045]; examples 3,4 * ----- | 1-8 | INV. B01D67/00 B01D71/36 |
| X | US 2007/131610 A1 (PENG WENQING [CN] ET AL) 14 June 2007 (2007-06-14) * paragraphs [0046] - [0051] * ----- | 1-4 | |
| X | CN 102 151 493 A (SHANGTENG NEW MATERIAL TECHNOLOGY SUZHOU CO LTD) 17 August 2011 (2011-08-17) * embodiment 4 * ----- | 1-3 | |

| | |
|---|---|
| | TECHNICAL FIELDS SEARCHED (IPC) |
| | B01D |

The present search report has been drawn up for all claims

| Place of search | Date of completion of the search | Examiner |
|---|---|---|
| Munich | 21 May 2014 | Hennebrüder, K |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 14 15 4612

This annex lists the patent family members relating to the patent documents cited in the above-mentioned European search report.
The members are as contained in the European Patent Office EDP file on
The European Patent Office is in no way liable for these particulars which are merely given for the purpose of information.

21-05-2014

| Patent document cited in search report | | | Publication date | Patent family member(s) | | Publication date |
|---|---|---|---|---|---|---|
| EP 0313263 | A2 | | 26-04-1989 | CA | 1318093 C | 25-05-1993 |
| | | | | CN | 1034889 A | 23-08-1989 |
| | | | | DE | 3879613 D1 | 29-04-1993 |
| | | | | DE | 3879613 T2 | 07-10-1993 |
| | | | | DK | 581788 A | 20-04-1989 |
| | | | | EP | 0313263 A2 | 26-04-1989 |
| | | | | FI | 884830 A | 20-04-1989 |
| | | | | GB | 2211190 A | 28-06-1989 |
| | | | | JP | H02645 A | 05-01-1990 |
| | | | | JP | 2547243 B2 | 23-10-1996 |
| | | | | NO | 884629 A | 20-04-1989 |
| | | | | PT | 88796 B | 29-01-1993 |
| US 2007131610 | A1 | | 14-06-2007 | AR | 060894 A1 | 23-07-2008 |
| | | | | CN | 101511457 A | 19-08-2009 |
| | | | | EP | 2035123 A2 | 18-03-2009 |
| | | | | TW | 200804484 A | 16-01-2008 |
| | | | | US | 2007131610 A1 | 14-06-2007 |
| | | | | WO | 2007133761 A2 | 22-11-2007 |
| CN 102151493 | A | | 17-08-2011 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4340479 A
- US 4925572 A
- US 5152905 A
- US 5443743 A
- US 5472621 A
- US 6074869 A

### Non-patent literature cited in the description

- **MIZUNO, T. et al.** A Novel Filter Rating Method Using Less Than 30-nm Gold Nanoparticle and Protective Ligand. *IEEE Transactions of Semiconductor Manufacturing,* 2009, vol. 22 (4), 452
- **MIZUNO, T. et al.** *IEEE Transactions of Semiconductor Manufacturing,* 2009, vol. 22 (4), 452
- **MIZUNO, T., et al.** A Novel Filter Rating Method Using Less Than 30-nm Gold Nanoparticle and Protective Ligand. *IEEE Transactions of Semiconductor Manufacturing,* 2009, vol. 22 (4), 452